Europäisches Patentamt

European Patent Office

Office européen des brevets

(11) Numéro de publication: **0 277 913**
**A1**

(12) **DEMANDE DE BREVET EUROPEEN**

(21) Numéro de dépôt: **88810029.4**

(22) Date de dépôt: **21.01.88**

(51) Int. Cl.⁴: **G 01 P 5/14**

(30) Priorité: **22.01.87 CH 221/87   13.10.87 CH 4007/87**

(43) Date de publication de la demande:
**10.08.88   Bulletin 88/32**

(84) Etats contractants désignés:
**AT BE CH DE ES FR GB GR IT LI LU NL SE**

(71) Demandeur: **Rufer, Jean-Martin**
**Crêt-du-Haut 38**
**CH-2502 Bienne  (CH)**

(72) Inventeur: **Rufer, Jean-Martin**
**Crêt-du-Haut 38**
**CH-2502 Bienne  (CH)**

(74) Mandataire: **Rochat, Daniel Jean et al**
**Bovard SA ingénieurs-conseils ACP Optingenstrasse 16**
**CH-3000 Bern 25  (CH)**

(54) **Anémomètre ou appareil portatif de mesure d'un déplacement.**

(57)   Le corps (1) en matière plastique transparente a la forme d'un parallélépipède rectangle allongé. Dans le sens de sa longueur, il est parcouru par le canal (2) qui débouche dans les faces (3) et (4) du corps (1) par les ouvertures (4) et (5). Il suffit de faire entrer une quantité déterminée d'eau dans le conduit tenu en position verticale et d'orienter l'ouverture 5 dans le sens du vent pour lire la différence de niveau sur la graduation (6).

FIG. 1

EP 0 277 913 A1

**Description**

### Anémomètre ou appareil portatif de mesure d'un déplacement

La présente invention découle de la constatation qu'il existe un besoin pour les sportifs s'adonnant notamment à la planche à voile, au ski, au delta-plan, au vélo, etc., de pouvoir mesurer, d'une manière au moins approximative, mais surtout par des moyens simples et peu délicats, la vitesse du vent à l'endroit où le sport en question est pratiqué. Bien entendu, l'anémomètre, ou l'appareil de mesure, qui a été conçu selon la présente invention pour répondre à ce besoin s'applique par conséquent à un domaine extrêmement large.

Pour satisfaire le besoin mentionné, l'objet de l'invention est donc un anémomètre ou appareil de mesure portatif de mesure d'un déplacement dans l'air, caractérisé en ce qu'il comporte un corps en un matériau transparent dans lequel est ménagé un conduit destiné à être rempli au moins partiellement d'un liquide, et comportant deux segments parallèles, un coude reliant les segments, et des liaisons entre les segments et des ouvertures situées dans deux faces différentes du corps, ce dernier étant destiné à être maintenu dans une position où les segments de conduit sont verticaux, le coude est situé à leur partie inférieure et les ouvertures sont orientées de manière que l'une d'elles soit exposée au déplacement d'air.

Cet anémomètre utilise le principe physique de la sonde de PRANDTL (ou tube de PITOT) et fonctionne avec de l'eau du milieu aquatique (lac, mer, etc) pour mesurer la vitesse du vent.

Cet anémomètre se porte sur l'homme et permet aux sportifs (véliplanchistes, équipages de petits voiliers, etc) de connaître et mesurer à chaque instant la vitesse et la force du vent à l'endroit où ils se trouvent.

Le brevet US-A-4 026 149 décrit un appareil destiné à mesurer une différence de pression. Il est composé d'une source d'air comprimé, d'un orifice émetteur d'air comprimé, d'un ou plusieurs orifices récepteurs. L'ensemble, y compris l'élément récepteur, constitué d'un tube présentant approximativement la forme d'un U et remplissant la fonction de manomètre est statique. L'appareil n'est pas portatif. Et surtout les deux orifices du tube ne sont pas exposés au même environnement. Enfin, le dispositif est complexe et donc coûteux, son domaine d'application ne couvre pas celui de la présente invention. L'anémomètre décrit dans le brevet US-A-2 993 374 est constitué d'un tube transparent dans la partie creuse duquel peut se déplacer une bille, ce tube étant lui-même placé dans une cage également transparente. Ces deux éléments ont le même axe de symétrie. La cage comporte deux orifices d'admission d'air tandis que le tube comprend deux orifices de mise à l'air libre. La bille peut s'élever dans le tube à une hauteur qui sera fonction de la force du vent. Cet appareil présente plusieurs inconvénients. D'abord pour être portatif, des moyens doivent nécessairement être prévus pour retenir la bille; le chemin de celle-ci est limité dans un intervalle déterminé. Sans ces moyens de rétention, le dispositif ne saurait être portatif. Par ailleurs, l'air doit traverser le tube de guidage de bille. Enfin, et surtout, l'anémomètre étant destiné principalement à être utilisé dans la pratique des sports aquatiques, l'eau pourra facilement y pénétrer et entraînera non seulement des erreurs de mesure mais rendra l'appareil inutilisable à plus ou moins court terme. L'anémomètre selon l'invention, au contraire, utilise le milieu liquide dans le cadre duquel le sport est pratiqué; plutôt que d'être un élément perturbateur, l'eau devient un élément support, c'est-à-dire actif du fonctionnement de l'anémomètre.

On va décrire ci-après, à titre d'exemple, trois formes d'exécution de l'objet de l'invention en se référant au dessin annexé dont

la fig. 1 est une vue en coupe de l'anémomètre selon la première forme d'exécution et

la fig. 2 une vue en perspective de la seconde forme d'exécution.

la fig. 3 est une vue en coupe de la troisième forme d'exécution.

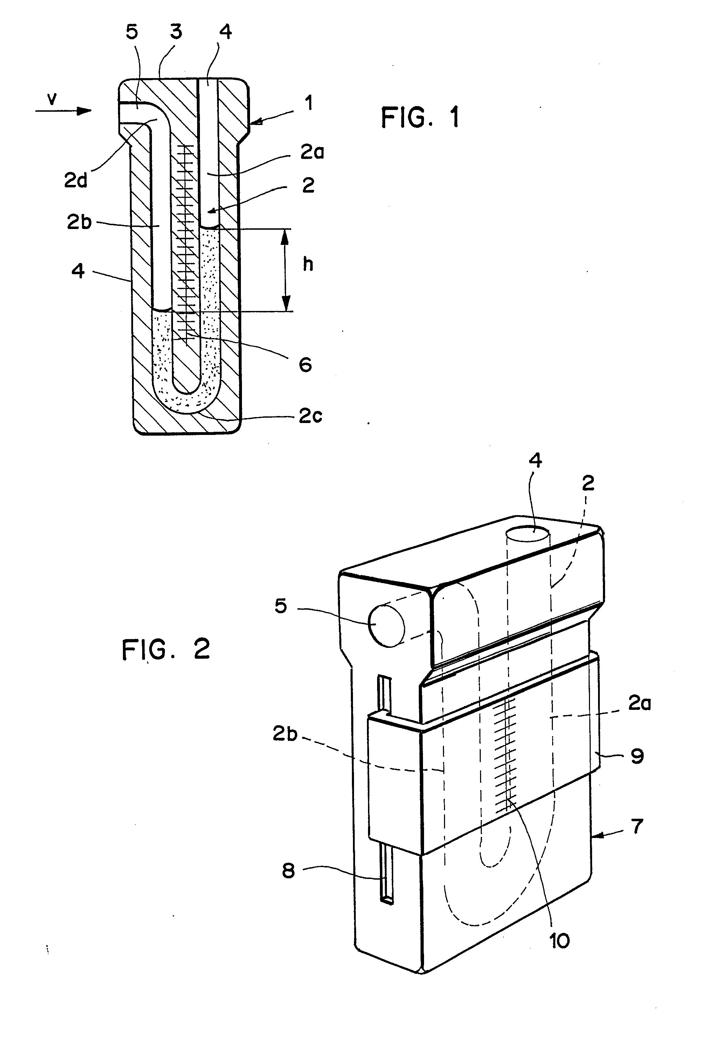

L'anémomètre représenté à la fig. 1 est constitué d'un corps 1 en un matériau transparent ou translucide, par exemple en matière plastique tel que le plexiglas, qui peut être mis en forme par moulage d'un seul bloc. Cette pièce ayant la forme générale d'un parallélépipède rectangle peut mesurer par exemple en hauteur 50 à 100 mm, en largeur 20 à 30 mm, en épaisseur 5 à 15 mm. Dans une autre forme d'execution, le bloc 1 pourrait également être en métal. A l'intérieur de ce bloc est ménagé un conduit continu 2 qui comprend deux segments rectilignes parallèles 2a et 2b qui s'étendent parallèlement à l'axe longitudinal du corps 1 et qui sont réunis l'un à l'autre, au voisinage d'une des faces frontales qui sera la face inférieure, par un segment coudé à 180° désigné par 2c. Le segment 2a traverse toute la longueur du corps à partir du coude 2c et débouche dans la face frontale supérieure 3 du bloc 1 par une ouverture circulaire 4. De préférence, cette face frontale supérieure sera plane.

Le second segment rectiligne 2b présente une longueur légèrement inférieure à celle du segment 2a. Il se termine au voisinage de la face 3 mais en retrait par rapport à celle-ci, par un coude 2d qui débouche à la partie supérieure de l'une des faces longitudinales 4 du bloc 1. Cette ouverture, désignée par 5, peut être pratiquée dans une partie légèrement renforcée du bloc 1. Une graduation 6 est marquée sur une des faces latérales du bloc 1, soit par un marquage, soit par une gravure. Ce peut être par exemple une graduation en millimètres.

Comme on le voit, la construction du dispositif est extrêmement simple.

Son utilisation est également simple. Il suffit de remplir d'eau le conduit 2 de façon que, lorsque le corps 1 est tenu dans une position telle que les segments rectilignes 2a et 2b sont verticaux, ceux-ci sont remplis approximativement jusqu'a mi-hauteur. Le corps est alors orienté, tout en le maintenant en position verticale, de façon que l'ouverture 5 soit dirigée face au vent. Il suffit alors de lire la différence de niveau de l'eau dans les deux segments rectilignes 2a et 2b pour obtenir une indication de la vitesse du vent. Si la graduation 7 est en millimètres, on pourra utiliser une tabelle de conversion donnant, en fonction de la différence de niveau en millimètre, la vitesse en km/h, en m/sec ou en degrés Beaufort. La table de conversion peut, le cas échéant, être collée contre une des faces du bloc.

Pour établir cette tabelle de conversion, on part d'une équation bien connue et on effectue les calculs suivants:

$$v = \sqrt{\frac{2}{p}\,\Delta\,p}$$

avec:
v : vitesse du vent en m/s
pp : poids spécifique de l'air en $Kg/m^3$
$\Delta p$ : différence de pression entre les deux canaux
d'autre part:
1 $Kp/m^2 \triangleq$ 1 mm $H_2O$
densité de l'air = 1,3 $Kg/m^3$

$$v \simeq \sqrt{15,09 \cdot h} \qquad\qquad h \mathrel{\widehat{=}} mm\ H_2 0$$

La fig. 2 montre une autre forme d'exécution de l'objet de l'invention. Dans cette autre forme d'exécution, le corps de l'anémomètre est ici un bloc 7 qui a approximativement la même forme que le bloc 1 mais présente, dans les deux faces longitudinales de sa tranche, une rainure 8. D'autre part, une des faces latérales est recouverte par un curseur 9, constitué d'une plaque à profil en U présentant des rebords le long de ses branches latérales, ces rebords étant engagés dans les rainures 8. Le curseur étant mobile le long du corps 7, ce dernier étant pourvu d'un conduit 2, identique à celui de la première forme d'exécution, avec deux ouvertures d'extrémité 4 et 5, on voit que la graduation 10 portée par le curseur 7 peut être déplacé de façon à amener une des extrémités de l'échelle graduée à la hauteur du niveau du liquide dans l'un des segments 2a ou 2b.

Dans une autre forme d'exécution qui n'est pas représentée, la lecture de la différence de niveau de l'eau, entre les deux branches du conduit 2, pourrait être réalisée au moyen d'un petit flotteur, par exemple une sphère de matière plastique vide, équipée d'une tige verticale, ce flotteur étant logé dans le segment 2b.

La grande facilité d'emploi du dispositif provient du fait qu'il peut être conservé normalement à sec et qu'il suffit de remplir d'eau jusqu'au niveau voulu au moment de l'emploi. L'appareil étant destiné essentiellement aux sports aquatiques, l'eau nécessaire est donc toujours présente.

La différence de densité entre l'eau douce et l'eau de mer n'est pas suffisante pour que la mesure puisse être faussée de ce fait.

Au lieu de réaliser l'ensemble du dispositif sous forme d'un bloc moulé ou injecté en matière plastique, on peut également le fabriquer à partir de tubes en matière plastique ou en verre convenablement coudés et coupés. Dans ce cas, l'échelle graduée pourrait être notée sur la portion de tube qui constitue le segment 2a ou le segment 2b.

Le cas échéant, le dispositif pourrait également être réalisé en un matériau souple.

On notera encore que le dispositif peut, le cas échéant, être intégré à un autre objet, de préférence un objet trouvant son utilisation également dans les sports aquatiques.

Ainsi, il peut être facilement combiné à une montre, à un pendentif, au bracelet d'une montre, de même qu'à un boîtier à clef. Une forme de réalisation possible consiste à réaliser une montre dite "montre-clip", c'est-à-dire dont le boîtier est solidaire de l'une de deux plaques articulées l'une à l'autre de façon à constituer une pince. Le conduit décrit peut être incorporé, par exemple, à l'une des plaques de ce clip. Ceci permet de fixer le dispositif à un vêtement ou à une embarcation. On peut également prévoir d'utiliser, comme bloc 1, le fond d'une montre-plongeur qui présenterait une épaisseur renforcée, dans lequel serait ménagé le conduit 2, la lecture de la différence de niveau pouvant se faire, soit grâce à une partie du fond qui serait réalisée en une matière transparente, soit grâce à un flotteur disposé dans l'un des segments rectilignes, de préférence le segment 2b et dont la tige déboucherait sur le côté du fond de façon à constituer un moyen de lecture lorsque le conduit serait rempli d'eau jusqu'au niveau nécessaire.

De façon générale, on conçoit que de multiples formes de réalisation différentes de l'objet décrit sont possibles.

Finalement, on notera que le dispositif présente l'avantage de ne posséder aucun élément de mesure électronique ou délicat, d'utiliser le milieu naturel qu'est l'eau, de ne pas être dépendant d'étalonnage fréquent, d'être fiable et quasi indestructible.

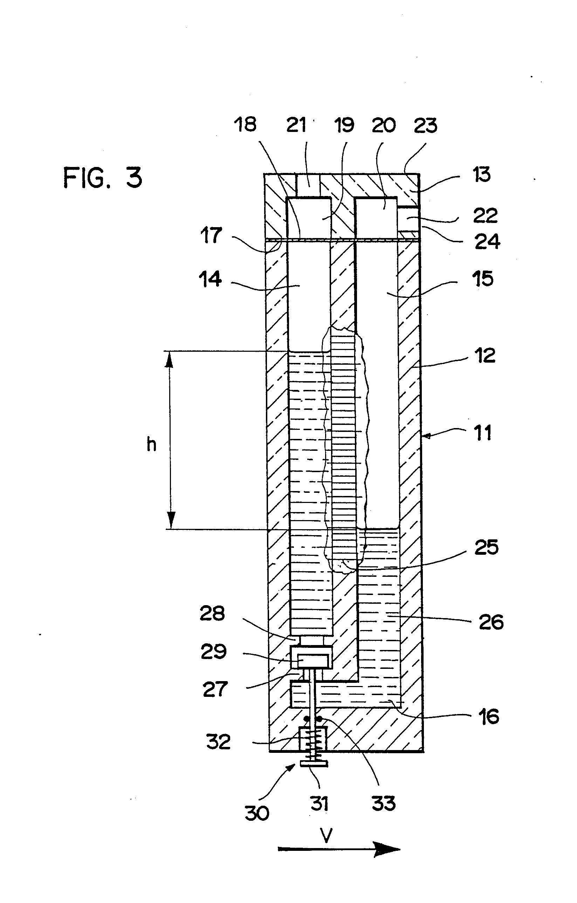

On va décrire maintenant à l'aide de la fig. 3 une troisième forme d'exécution. On s'est aperçu que durant la

3

pratique de certains sports, tels que le ski, le vélo ou l'aile delta il serait intéressant pour le sportif de connaître sa vitesse instantanée ou éventuellement sa vitesse maximale atteinte au cours d'une période d'exercice du sport, à l'aide d'un dispositif simple et peu couteux susceptible d'être porté sur l'homme, fixé à un baton de ski, au vélo, ou à un montant de l'aile delta.

Il convient pour cela de modifier respectivement d'adapter opportunément la construction du dispositif tel que décrit plus haut.

Dans la forme d'exécution représentée, l'appareil comporte un corps 11 qui sera de préférence en matière plastique transparente, et qui, dans la forme d'exécution représentée, est constitué de deux parties 12 et 13 fixées l'une à l'autre. La partie 12, de forme allongée, comporte deux segments de conduit rectilignes et parallèles 14 et 15 réunis à l'une de leurs extrémités par un coude 16. Les deux segments de conduit parallèles 14 et 15 débouchent dans une face supérieure 17 de l'élément 12 sur laquelle est fixée une pièce 18 constituée d'une membrane très mince et poreuse (porosité: 5 - 15 µm) de poly-tétrafluoro-éthylène PTFE). La pièce 13 qui complète le corps 11 est fixée au-dessus de la membrane poreuse 18. Elle comporte deux logements 19 et 20 qui forment des prolongements des segments de conduit 14 et 15 et deux ouvertures 21 et 22, l'une ménagée dans la face sommitale plane 23 de la pièce 13, et l'autre dans une des faces latérales 24 de cette pièce. Les pièces 12 et 13 et la membrane 18 sont assemblées par collage ou soudage, par exemple, de manière à être étanches. Tel que décrit ci-dessus, l'appareil peut fonctionner en tant qu'appareil de mesure de vitesse ou en tant qu'anémomètre. Il suffit de pourvoir une des faces du corps 12 d'une graduation telle que la graduation 25 afin de permettre de lire la différence de hauteur h entre les niveaux de la masse de liquide 26 contenue dans le conduit intérieur 14, 15, 16, lorsque l'ouverture 23 est exposée au vent absolu ou relatif que l'on veut mesurer.

Les membranes poreuses en poly-tétrafluoro-éthylène, spécialement celles qui sont connues sous le nom de GOR-TEX et qui sont laminées sur un support-fil présentent précisément des propriétés de résistance mécanique, de perméabilité à l'air et de réaction hydro phobe en présence de liquides acqueux, qui les rendent particulièrement aptes à l'emploi décrit ici. Si le liquide 26 est de l'eau ou de l'eau colorée, ou éventuellement de l'eau dans laquelle est dissout un produit susceptible d'abaisser son point de congélation, la masse de liquide restera contenue à l'intérieur des segments 14, 15, 16, du corps intérieur, alors qu'au contraire la pression de l'air transmise par les ouvertures 23 et 21 se transmettra à travers la membrane sur la surface du liquide. En d'autres termes, une telle membrane permet le fonctionnement du dispositif en tant qu'anémomètre ou instrument de mesure de vitesse, s'il est placé en position verticale et exposé au vent. En revanche, cette membrane retient le liquide à l'intérieur du corps si l'appareil est placé dans une position quelconque dans une boîte ou dans une poche.

Cependant, l'appareil représenté à la fig. 3 comporte en outre deux moyens qui permettent de l'utiliser comme instrument de mesure de maximum. Comme on le voit, la partie inférieure du segment 14 relié à l'ouverture 21 comporte un siège 27 et un anneau de retenue 28 placé légèrement au-dessus du siège 27. De plus, un obturateur 29 est logé entre le siège 27 et l'anneau de retenue 28. Lorsque l'ouverture 23 est exposée à un vent absolu ou relatif, le corps étant tenu en position verticale, l'écoulement du liquide du conduit 15 au conduit 14 a pour effet de soulever l'obturateur 29. Cependant, lorsque cet écoulement est stabilisé, l'obturateur 29, du fait de son poids, vient reposer sur le siège 27 et maintient la différence de niveau h, même si la vitesse diminue ultérieurement, ou si l'appareil est tourné dans une autre direction.

Le cas échéant, le corps peut en outre être équipé d'un dispositif tel que le dispositif 30 comportant un poussoir 31 à ressort 32 traversant une garniture d'étanchéité 33 pour déplacer l'obturateur 29 de son siège 27 et permettre le retour du liquide 26 dans une position de zéro. Bien entendu, la constitution du dispositif 30, et du siège 27, et la forme de l'obturateur 29 peuvent varier suivant les exécutions. En particulier, l'obturateur 29 peut être un élément en forme de bille ou en forme de disque circulaire, d'un matériau ayant une densité convenable. Il suffira que la densité de ce matériau soit légèrement supérieure à celle de l'eau.

De manière analogue aux deux premières formes d'exécution décrites, le corps 11 peut être intégré à un autre instrument de mesure, montre, boussole, thermomètre, et la tabelle nécessaire pour convertir la hauteur h en une indication de vitesse être combinée à l'échelle de mesure de cet autre instrument.

**Revendications**

1. Anémomètre ou appareil portatif de mesure d'un déplacement dans l'air, caractérisé en ce qu'il comporte un corps en un matériau transparent dans lequel est ménagé un conduit destiné à être rempli au moins partiellement d'un liquide, et comportant deux segments parallèles, un coude reliant les segments, et des liaisons entre les segments et des ouvertures situées dans deux faces différentes du corps, ce dernier étant destiné à être maintenu dans une position où les segments de conduit sont verticaux, le coude est situé à leur partie inférieure et les ouvertures sont orientées de manière que l'une d'elles soit exposée au déplacement d'air.

2. Anémomètre selon la revendication 1, caractérisé en outre par une graduation visible sur le corps et permettant de mesurer la différence de hauteur entre les niveaux du liquide dans les deux segments parallèles quand l'une des dites ouvertures du conduit est exposée au vent.

3. Anémomètre selon la revendication 2, caractérisé en ce que les dites faces du corps dans lesquelles débouchent les deux ouvertures d'extrémité du conduit sont orientées dans des directions faisant entre elles un angle de 90°.

4. Anémomètre selon la revendication 2, caractérisé en ce que la dite graduation est portée par un curseur mobile sur le corps dans une direction parallèle à celle des dits segments.

5. Anémomètre selon la revendication 2, caractérisé en ce que la dite graduation est portée par un flotteur engagé dans celui des dits segments de conduit qui est relié à l'ouverture destinée à être exposée au vent.

6. Anémomètre selon l'une des revendications précédentes, caractérisé en ce que le corps a la forme d'un parallélépipède, les dits segments de conduit parallèles étant orientés dans le sens de sa longueur, l'un d'eux étant raccordé par un coude à une ouverture située dans une face longitudinale du corps tandis que l'autre segment s'étend en ligne droite jusqu'à une face frontale supérieure du corps.

7. Anémomètre selon l'une quelconque des revendications précédentes, caractérisé en ce que le corps forme une partie d'un objet portatif ayant une autre fonction que celle de la mesure anémométrique, notamment une plaque articulée faisant partie d'une montre-clip, un élémet de bracelet de montre, un pendentif, une montre-plongeur.

8. Anémomètre selon la revendication 7, combiné à une montre, caractérisé en ce que la dite montre porte une lunette tournante agencée de manière à constituer un dispositif de conversion de la différence des niveaux mesurée entre les segments de conduit en une information de vitesse du vent.

9. Anémomètre selon la revendication 1, caractérisé en ce que des obturateurs fixes, perméables à l'air et imperméables au liquide sont placés dans ledit conduit au voisinage de chacune des ouvertures et le conduit est rempli dudit liquide en permanence.

10. Anémomètre selon la revendication 9, caractérisé en ce que le liquide est un liquide aqueux et en ce que les obturateurs sont constitués par des éléments de membrane poreuse en un matériau hydrophobe.

11. Anémomètre selon la revendication 10, caractérisé en ce que le corps est formé de deux parties séparées par une surface plane sur laquelle un segment de membrane est collé.

12. Anémomètre selon la revendication 10 ou la revendication 4, caractérisé en ce que la membrane poreuse est en poly-tétrafluoro-éthylène (PTEE).

13. Anémomètre selon les revendications 1 ou 9, caractérisé en ce qu'il comporte dans le conduit un clapet anti-retour susceptible d'être ouvert par le déplacement du liquide lors de la mesure.

14. Anémomètre selon la revendication 13, caractérisé en ce que le clapet anti-retour comporte un obturateur libre reposant normalement sur un siège ménagé dans le conduit au voisinage du coude.

15. Anémomètre selon la revendication 14, caractérisé en ce que l'obturateur libre est une bille ou un disque.

16. Anémomètre selon la revendication 14, caractérisé en ce que le corps est équipé d'un dispositif de soulèvement de l'obturateur actionnable manuellement.

17. Utilisation de l'anémomètre selon la revendication 1 ou l'une des revendications 9 à 16 comme appareil de mesure de vitesse.

0277913

FIG. 1

FIG. 2

0277913

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 993 374  (F.W. DWYER et al.)<br>* Colonne 1, ligne 46 - colonne 2, ligne 64; figures 1-4 * | 1 | G 01 P    5/14 |
| A,D |  | 2,3,6 | |
| Y | US-A-4 026 149  (J.W. TANNEY)<br>* Colonne 3, lignes 56-60; figure 1 * | 1 | |
| A,D |  | 2,3,6 | |
| A | US-A-2 733 601  (R.P. MITCHELL)<br>* En entier; figures 1,2 * | 1,2,13-15,17 | |

DOMAINES TECHNIQUES
RECHERCHES (Int. Cl.4)

G 01 P

Le présent rapport a été établi pour toutes les revendications

| Lieu de la recherche | Date d'achèvement de la recherche | Examinateur |
|---|---|---|
| LA HAYE | 19-04-1988 | HANSEN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)